# EUROPÄISCHE PATENTANMELDUNG

(11) **EP 0 535 436 A2**
(43) Veröffentlichungstag der Anmeldung: **07.04.1993**
(21) Anmeldenummer: 92115708.7
(22) Anmeldetag: 14.09.1992
(51) Int. Cl.: G06K 19/00, G06K 19/06, B42D 15/02, B42D 15/10

(54) **Chipkarte und Verfahren zur Herstellung derselben**

(30) Priorität: 01.10.1991 DE 4132720
(71) Anmelder: GAO Gesellschaft für Automation und Organisation mbH, D-81307 München (DE)
(72) Erfinder: Haghiri, Yahya, W-8000 München 40 (DE)
(74) Vertreter: Klunker . Schmitt-Nilson . Hirsch

(57) **Zusammenfassung**

Bei einer Wertkarte (1) mit einer in einer angepaßten Aussparung lösbar angeordneten Minichipkarte (2) wird die Minichipkarte über wenigstens ein auf der Kartenoberfläche vorgesehenes Befestigungselement (5) in ihrer Lage fixiert. Vorzugsweise wird das Befestigungselement nach einem ersten Stanzvorgang, bei dem die Minichipkarte noch über Stege mit dem Kartenkörper verbunden ist, derart auf der Karte plaziert, daß es die Bereiche zwischen Minichipkarte und Kartenkörper überbrückt. In einem zweiten Stanzvorgang werden die Stege entfernt, wonach die Minichipkarte nur noch durch das Befestigungselement (5) in ursprünglicher Lage zum Kartenkörper gehalten wird.

## Beschreibung

Die Erfindung betrifft eine Wertkarte mit in einer fensterartigen Ausnehmung lösbar angeordneten Minichipkarte, welche einen Halbleiterchip und gegebenenfalls zugehörige Kontaktflächen aufweist sowie ein Verfahren zur Herstellung derartiger Karten.

Wertkarten mit eingebettetem Halbleiterchip, sogenannte Chipkarten, sind allgemein bekannt und finden derzeit als Kreditkarten, Telefonkarten, Identifikationskarten etc. zunehmend Anwendung. Aufbau und Abmessungen der Chipkarten sowie Form und Lage der Kontaktflächen sind durch internationale Normen festgelegt (ISO 7810 und ISO 7816/2).

Neben den in den genannten Normen definierten Chipkarten wurden für spezielle Anwendungen auch sogenannte Minichipkarten entwickelt, die bezüglich Chip und Kontaktflächen den genormten Chipkarten entsprechen, bei denen aber die äußeren Abmaße reduziert und die Umrißform verändert wurde. Um derartige Minichipkarten auch in Geräten verwenden zu können, die für übliche Norm-Chipkarten konzipiert sind, gibt es darüber hinaus Vorschläge, Wertkarten mit fensterartigen Ausnehmungen zu versehen, in denen die mit Verbindungselementen ausgestatteten Minichipkarten fixiert werden können. Wertkarten mit derartigen reversibel entfernbaren Chipelementen sind beispielsweise der US-PS 4,511,796 oder der DE-PS 38 04 361 zu entnehmen.

Um die Herstellung von Wertkarten mit integrierten Minichipkarten mit ausreichender Präzision, aber auch mit vertretbarem wirtschaftlichen Aufwand, zu ermöglichen, wurde in der DE-OS 40 07 221 darüber hinaus ein Verfahren vorgeschlagen, demnach die Minichipkarten derart aus herkömmlichen Norm-Chipkarten auszustanzen sind, daß diese mit der Normkarte nur noch über wenige schmale Stege verbunden sind. Nach Durchbrechen der Stege ist die Minichipkarte von der Wertkarte zu lösen.

Die Tatsache, daß eine nach dem in der DE-OS 40 07 221 beschriebenen Verfahren hergestellte Minichipkarte nach dem Entfernen aus der Wertkarte nicht erneut wieder in der Ausnehmung der Wertkarte fixiert werden kann, hat sich in der Praxis als wenig störend herausgestellt. Dies wohl deshalb, weil aus heutiger Sicht die Anwendungen beider Kartenversionen klar voneinander getrennt sind. Die Norm-Wertkarte als Träger der Minichipkarte wird demnach vorwiegend in den vorbereitenden Verfahrensschritten, wie z. B. der Kartenpersonalisierung, benötigt. Die Minichipkarte allein wird in erster Linie vom Verbraucher, beispielsweise bei Mobilfunkgeräten, eingesetzt.

Als nachteilig erwies es sich bei der letztgenannten Ausführungsform jedoch, daß die Verbindungsstege umso schwieriger zu durchbrechen sind, je stabiler der gesamte Kartenaufbau gestaltet ist. Auch bei sehr schmal ausgeführten Stegen kann das Herausbrechen der Minichipkarte somit sehr mühsam und aufwendig sein. Je mehr die Stege dem Herausbrechen widerstehen, umso größer ist auch die Gefahr, daß bei diesem Vorgang die Minichipkarte zu großen Biegebelastungen ausgesetzt wird. Dies kann die Beschädigung der Karten oder gar die Zerstörung des Chips zur Folge haben. Darüber hinaus wird die Minichipkarte selbst bei erfolgreichem Trennen von der Wertkarte in der Regel im Bereich der Verbindungsstege Reste dieser Stege aufweisen, die den präzisen Verlauf der Kartenkanten stören. Wie sich zeigte, behindern oder verhindern diese Stegreste das Einschieben der Minichipkarten in die bei Geräten vorgesehenen Kartenhalterungen, wodurch letztlich die Verwendungsmöglichkeit der Minichipkarten beim Kunden in Frage gestellt wird.

Aufgabe der Erfindung ist es deshalb, eine Wertkarte mit eingelagerter Minichipkarte sowie ein Verfahren zur Herstellung derselben vorzuschlagen, bei der das Entfernen der Minichipkarte problemlos möglich ist und die Minichipkarte auch nach dem Entfernen scharf konturierte Umrißlinien aufweist.

Diese Aufgabe wird erfindungsgemäß durch die im Kennzeichen des Hauptanspruchs genannten Maßnahmen gelöst. Weiterbildungen sind den Unteransprüchen zu entnehmen.

Die Erfindung baut auf den Grundgedanken auf, daß die Verbindung zwischen Minichipkarte und Wertkarte in der Praxis keinen allzu großen mechanischen Belastungen ausgesetzt ist. Die Fixierung der Minichipkarte muß deshalb nicht allen Anforderungen entsprechen, die normalerweise an eine Wertkarte gestellt werden. Berücksichtigt man dies, indem man die Minichipkarte leichter lösbar fixiert, ist dieser Umstand bei der Trennung beider Karten von Nutzen.

Gemäß einer bevorzugten Ausführungsform der Erfindung sind Kartenkörper und Minichipkarte durch ein Befestigungselement miteinander verbunden, das die vom Kartenkörper durch einen Stanzvorgang getrennte Minichipkarte in ihrer Lage fixiert. Das Befestigungselement wird vorzugsweise nach einem ersten Stanzvorgang, bei dem die Minichipkarte noch über Stege mit dem Kartenkörper verbunden ist, derart auf der Karte plaziert, daß es die Bereiche zwischen Minichipkarte und übrigen Kartenkörper überbrückt. In einem zweiten Stanzvorgang werden die Stege entfernt, wonach die Minichipkarte nur noch über das Befestigungselement in ihrer ursprünglichen Lage zum Kartenkörper gehalten wird und auf einfache Weise ohne Hilfsmittel vom Kartenkörper lösbar ist.

Als besonders vorteilhaft erweist es sich somit, daß trotz einfacher Herstellung eine Wertkarte mit integrierter Minichipkarte zur Verfügung steht, die alle Anforderungen hinsichtlich Kontaktlage etc. erfüllt, die aber auch ohne jede Hilfsmittel voneinander leicht zu trennen sind. Das erfindungsgemäße Prinzip gestattet es auch eine bereits entfernte Minichipkarte erneut in der Ausnehmung der Wertkarte zu fixieren. Dies kann in Ausnahmefällen wünschenswert sein.

Neben den normalen Anforderungen können mit der erfindungsgemäßen Ausführungsform auch weitere Vorteile erzielt werden, wenn nämlich das zum Fixieren verwendete Klebeband beidseitig klebend ausgeführt ist. In diesem Fall kann die Wertkarte auch auf sogenannte Werbeträger, das sind beispielsweise Informationsblätter, Bedienungsanweisungen, Werbeschriften etc., befestigt werden. Derartige Maßnahmen sind beispielsweise in der DE-OS 33 05 817 beschrieben, auf die in diesem Zusammenhang ausdrücklich Bezug genommen wird.

Zusammenfassend ist darauf hinzuweisen, daß durch Vorsehen eines einseitig am Kartenkörper anhaftenden Befestigungselements eine aus dem Kartenkörper vollständig ausgestanzte Minichipkarte unverändert in der Normposition gehalten werden kann. Die Fixierung ist reversibel, d. h. nach dem Loslösen der Minichipkarte kann diese auf der Kleberschicht erneut befestigt werden. Obwohl das Vorsehen lösbarer Chipelemente bereits bekannt war, verblüfft die erfindungsgemäße Lösung durch besondere Einfachheit und Funktionalität. Der Fachmann hatte zwar durchaus bereits die Idee, Chipelemente mittels Klebefolien im Kartenkörper zu fixieren, wie dies aus der EP-PS 0 019 280 ersichtlich ist. In diesem Fall wurde dies aber im Zusammenhang mit einer völlig anderen Aufgabenstellung genannt. Außerdem wurde größter Wert darauf gelegt, daß das Chipelement dauerhaft im Kartenkörper fixiert bleibt und gerade nicht lösbar mit der Wertkarte verbunden ist.

Weitere Vorteile sind der nachfolgenden Beschreibung von Ausführungsbeispielen zu entnehmen. Es zeigen:
- Fig. 1: eine nach herkömmlichem Verfahren gestanzte Wertkarten-/Minichipkarten-Konfiguration,
- Fig. 2, 3: die erfindungsgemäße Wertkarten-/Minichipkarten-Konfiguration in unterschiedlichen Verfahrensschritten,
- Fig. 4: die erfindungsgemäße Wertkarten-/Minichipkarten-Konfiguration mit von der Wertkarte lösgelöster Minichipkarte,
- Fig. 5: die erfindungsgemäße Wertkarten/Minichipkarten-Konfiguration auf einem zusätzlichen Datenträger fixiert.

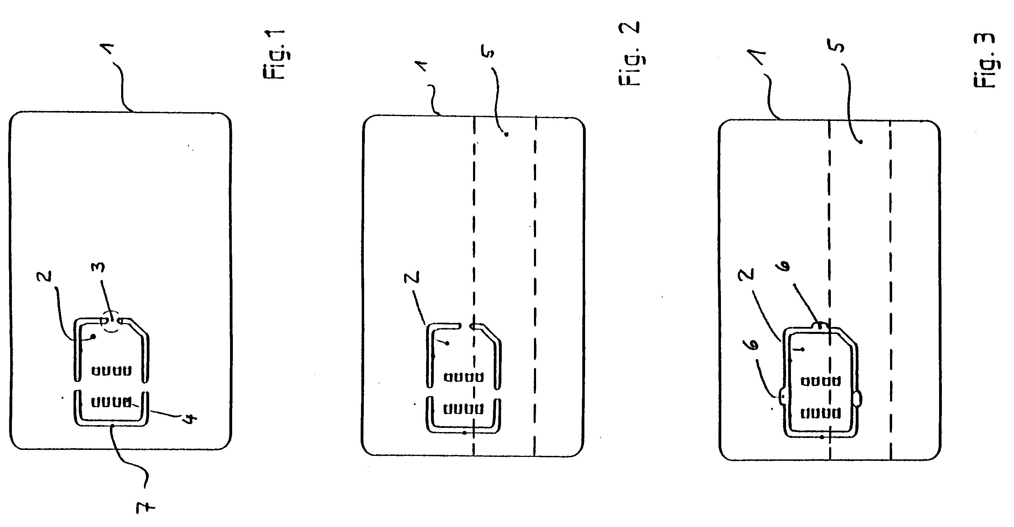

Fig. 1 zeigt eine Wertkarte 1 mit vorgestanzter Minichipkarte 2, welche über Verbindungsstege 3 mit der Wertkarte 1 verbunden ist. Die Minichipkarte 2 weist einen Halbleiterchip auf (nicht dargestellt), der im Karteninneren eingebettet und mit den Kontaktflächen 4 verbunden ist. Die in Fig. 1 dargestellte Wertkarte ist aus dem Stand der Technik bzw. der DE-OS 40 07 221 bekannt.

Nach dem in der o.g. Offenlegungsschrift beschriebenen Verfahren ist die Minichipkarte 2 über Verbindungsstege 3 mit der Wertkarte fest verbunden und wie eine herkömmliche Norm-Chipkarte zu verwenden. Soll die Minichipkarte für sich Anwendung finden, durchtrennt bzw. durchbricht man die Verbindungsstege 3, wonach sich die Minichipkarte aus der fensterartigen Ausnehmung 7 der Wertkarte 1 entfernen läßt. Es hat sich gezeigt, daß bei widerstandsfähigem Kartenmaterial das Durchbrechen der Stege 3 relativ schwierig sein kann. Da das Ausbrechen ein relativ unkontrollierter Vorgang ist, bleiben entweder an den Kanten der Minichipkarte Reste der Verbindungsstege stehen oder reißen die Verbindungsstege in die Fläche der Minichipkarte ein und beschädigen dieselbe.

Fig. 2 und 3 zeigen die erfindungsgemäße Wertkarten-/ Minichipkarten-Konfiguration in verschiedenen Verfahrensschritten.

Ausgehend von der in der DE-OS 40 07 221 beschriebenen Wertkarte wird in einem ersten Verfahrensschritt auf der Kartenrückseite ein Klebefilm 5 derart aufgebracht, daß zumindest sowohl ein Teilbereich der Minichipkarte 2 als auch ein Teil der verbleibenden Wertkarte 1 davon abgedeckt wird. Nach Aufbringen des Klebefilms 5 werden, wie aus Fig. 3 ersichtlich ist, in einem weiteren Stanzvorgang die Verbindungsstege 3 aus der Wertkarte 1 ausgestanzt. Das Ausstanzen der Verbindungsstege 3 wird vorzugsweise so durchgeführt, daß die an die Minichipkarte angrenzende Stanzlinie exakt auf der Umrißlinie der Minichipkarte verläuft. Die Minichipkarte ist somit von der Wertkarte vollständig getrennt und nur noch über das zusätzliche Verbindungselement 5 (Klebefilm) mit der Wertkarte verbunden.

Aus den Fig. 2 und 3 ist erkennbar, daß sich trotz des Ausstanzens der Stege 3 an der Position der Minichipkarte 2 nichts geändert hat. Der Klebefilm 5 hält die Minichipkarte 2 unverändert in der Aussparung 7. Die Position der Kontakte 4 entspricht somit unverändert der ursprünglichen Kontaktanordnung bezogen auf die Wertkarte und erfüllt damit auch die entsprechenden internationalen Standards solcher Karten.

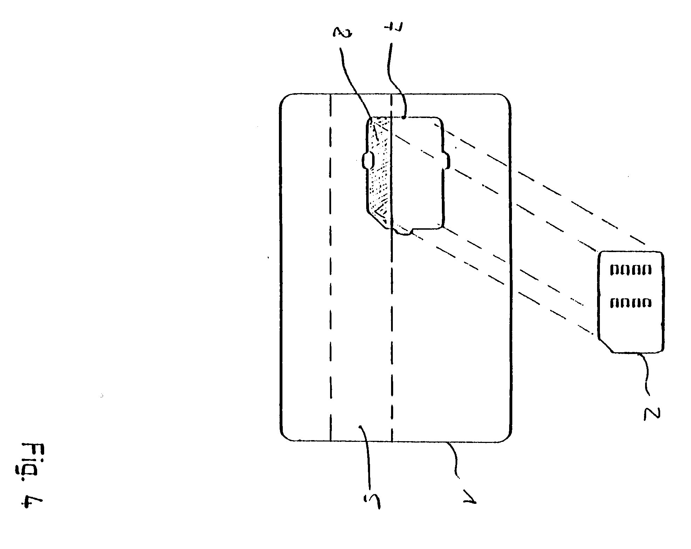

Durch Loslösen des Klebefilms 5 oder durch Nachvornebiegen und anschließendes Abziehen läßt sich die Minichißkarte 2, wie in Fig. 4 dargestellt, leicht aus dem Fenster der Wertkarte 1 entfernen. Geschieht das Abziehen der Minichipkarte 2 behutsam, d. h. ohne Beschädigung des Klebefilms 5, kann sie zu einem späteren Zeitpunkt wieder in das Fenster 7 eingesetzt und auf der schraffiert dargestellten Klebefläche 8 erneut fixiert werden.

Dem Fachmann leuchtet ein, daß die Fixierung der Minichipkarte unter Nutzung des erfindungsgemäßen Prinzips auf unterschiedlichste Weise erfolgen kann. So ist dies z. B. durch ganzflächiges Abdecken mit dem Klebefilm 5 ebenso möglich, wie mittels eines oder mehrerer kurzer Klebefilmstreifen, die lediglich kleine Teilbereiche der Minichipkarte und der verbleibenden Wertkarte abdecken. Wichtig ist in diesem Zusammenhang nur, daß das Befestigungselement bzw. der Klebefilm die Stanzlinie über eine bestimmte Länge oder an mindestens zwei oder drei Punkten derart überbrückt, daß die Minichipkarte auch nach Wegstanzen der Verbindungsstege 3 ausreichend gut fixiert bleibt.

Das Ausstanzen der Verbindungsstege 3 kann ebenfalls neben der in Fig. 3 dargestellten Form, bei der die Stege durch Ausstanzen ovaler Inseln 6 entfernt werden, auch durch linienartiges Durchschneiden des Kartenmaterials entlang der Außenkante der Minichipkarte erfolgen. Die letztgenannte Ausführungsform hat den zusätzlichen Vorteil, daß die Minichipkarte 2 beim Wiedereinsetzen in die Wertkarte 1 durch die im Fenster 7 der Wertkarte verbleibenden Stegreste relativ einfach in der Normposition angeordnet werden kann.

Alternativ zum Aufbringen des Klebefilms kann als Befestigungselement auch eine Zusatzfolie entweder bereits bei der Kartenherstellung oder vor dem Stanzvorgang auf der Kartenoberfläche vorgesehen werden. In beiden Fällen darf das Befestigungselement keinen festen Verbund mit dem Kartenkörper eingehen; es darf nur anhaften und muß nachträglich ablösbar sein. Im erstgenannten Fall wird dies durch entsprechende Einstellung der Laminierparameter und/oder geeignete Wahl der Materialien erreicht. Im zweiten Fall sind zur Verbindung des Befestigungselements mit dem Kartenkörper spezielle Klebstoffe einzusetzen.

In beiden Fällen erhält man den Vorteil, daß die Minichipkarte nur mit einem einzigen Stanz- bzw. Schneidvorgang aus der Wertkarte ausgestanzt werden kann. Die Stanzung darf dann allerdings nicht durch das Befestigungselement hindurch, sondern, wie dies beim Etikettenstanzen üblich ist, nur bis zur Oberfläche des Befestigungselements erfolgen. Zu berücksichtigen ist allerdings, daß bei einer auf diese Weise hergestellten Wertkarte der Kartenkörper aufgrund der Zusatzfolie die von der Norm vorgeschriebene Kartendicke überschreitet. Die von der Wertkarte losgelöste Minichipkarte weist allerdings die ursprüngliche Kartendicke auf. Dimensioniert man den Kartenaufbau andererseits so, daß er zusammen mit der Zusatzfolie der Norm entspricht, ist die spätere Minichipkarte unter Umständen zu dünn oder im unteren Grenzbereich der Norm.

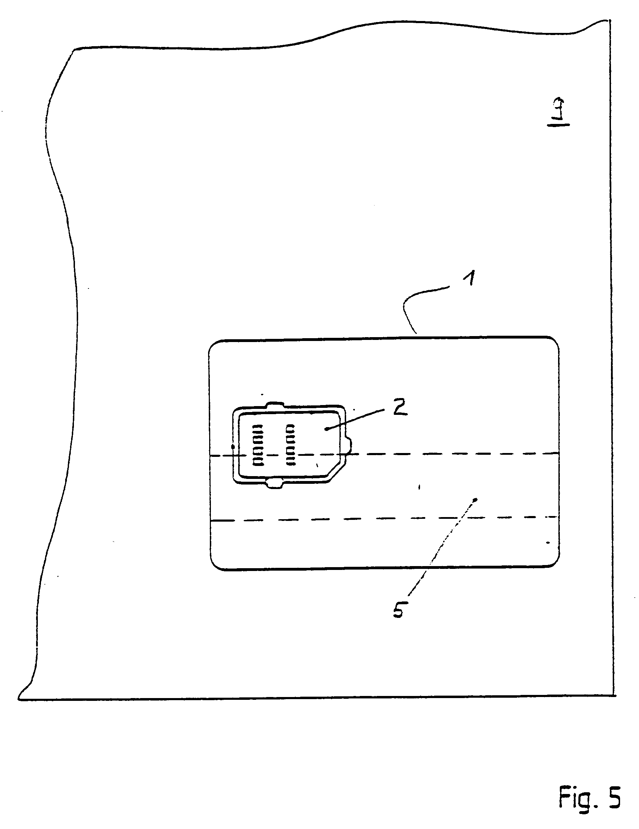

Eine weitere Ausführungsform der Erfindung ist in Fig. 5 dargestellt. Bei dieser Variante ist der Klebefilm 5 beidseitig klebend ausgeführt. Nach Abziehen einer eventuell vorzusehenen rückwärtigen Schutzschicht kann eine derartige Karte ohne zusätzliche Maßnahmen auf einem Trägermaterial 9 befestigt werden. Der Träger 9 kann in bekannter Weise als Werbeträger-, Begleitbrief oder dergleichen ausgebildet sein.

Die beschriebenen Ausführungsformen beinhalten eine breite Anwendungspalette. Unter Berücksichtigung der jeweiligen Vor- und Nachteile ist für unterschiedliche Anwendungen die jeweils beste Ausführungsform auszuwählen.

Für den Fachmann ist einleuchtend, daß anstelle der beschriebenen einzelnen Minichipkarten pro Wertkartenkörper auch mehrere derartige Minichipkarten vorsehbar und nach dem gleichen Prinzip fixierbar sind. Darüber hinaus können diese Minichipkarten natürlich neben der normgerechten Anordnung in der Wertkarte auch außerhalb der von der Norm vorgegebenen Bereiche angeordnet sein. Derartige Maßnahmen sind insbesondere in den Fällen sinnvoll, in denen die Wertkarte lediglich als Trägerelement für mehrere Minichipkarten verwendet werden soll, um beispielsweise in handelsüblichen Personalisierungsvorrichtungen pro Wertkarte mehrere Minichipkarten parallel bearbeiten zu können.

In gleicher Weise ist einleuchtend, daß die Erfindung auch für kontaktlose Minichipkarten verwendbar ist, bei denen die jeweiligen Kontaktflächen durch spezielle technische Maßnahmen ersetzt werden bzw. bei denen der Energie- und Datentransfer mittels optischer, kapazitiver oder induktiver Kopplung erfolgt.

## Patentansprüche

1. Wertkarte mit in einer fensterartigen Ausnehmung lösbar angeordneten Minichipkarte, welche einen Halbleiterchip und gegebenenfalls zugehörige Kontaktflächen aufweist, dadurch **gekennzeichnet**, daß die Minichipkarte (2) mittels eines oder mehrerer zusätzlicher Befestigungselemente (5) in der Ausnehmung (6) gehalten wird, wobei das oder die Befestigungselement(e) (5) auf der Oberfläche der Wertkarte (1) und der Minichipkarte (2) angeordnet sind.

2. Wertkarte nach Anspruch 1, dadurch **gekennzeichnet**, daß das Befestigungselement (5) ein Haft- oder Klebefilm ist, der zumindest Teilbereiche der Minichipkarte und der Wertkarte abdeckt.

3. Wertkarte nach Anspruch 1 oder 2, dadurch **gekennzeichnet**, daß das Befestigungselement (5) nur auf einer der beiden Kartenoberflächen, vorzugsweise der Kartenrückseite angeordnet ist.

4. Wertkarte nach einem der Ansprüche 1 - 3, dadurch **gekennzeichnet**, daß das Befestigungselement (5) ein Klebefilm mit beidseitig selbstklebenden Eigenschaften ist.

5. Wertkarte nach einem oder mehreren der vorhergehenden Ansprüche, dadurch **gekennzeichnet,** daß pro Wertkarte (1) mehrere Minichipkarten (2) vorgesehen sind.

6. Verfahren zur Herstellung einer Wertkarte nach Anspruch 1, dadurch **gekennzeichnet**, daß
- in einem ersten Verfahrensschritt in bekannter Weise eine Wertkarte mit einem oder mehreren Halbleiterchips sowie gegebenenfalls zugehörigen Kontaktflächen erstellt wird,
- in einem zweiten Verfahrensschritt, ebenfalls in bekannter Weise, im Bereich des oder der Halbleiterchips und deren zugehörige Kontaktflächen Umrißlinien der Minichipkarten eingestanzt werden, die durch Verbindungsstege unterbrochen sind und durch die die Minichipkarten in der Wertkarte gehalten werden,
- daß ein oder mehrere Befestigungselemente derart auf der Kartenoberfläche angeordnet werden, daß sie zumindest Teilbereiche der Minichipkarte bzw. der Minichipkarten und der Wertkarte abdecken und
- daß in einem letzten Verfahrensschritt die Verbindungsstege zwischen Wertkarte und Minichipkarte bzw. Minichipkarten durchgetrennt werden.

7. Verfahren zur Herstellung einer Wertkarte nach Anspruch 1, dadurch **gekennzeichnet**, daß
- in einem ersten Verfahrensschritt eine Wertkarte mit einem oder mehreren Halbleiterchips sowie gegebenenfalls zugehörigen Kontaktflächen in bekannter Weise erstellt wird,
- daß entweder während der Herstellung der Wertkarte oder daran anschließend ein oder mehrere zusätzliche Befestigungselemente auf der Kartenoberfläche derart angeordnet werden, daß sie sowohl die Bereiche des Halbleiterchips als auch Bereiche der verbleibenden Kartenoberfläche abdecken,
- daß im Bereich des oder der Halbleiterchips die Umrißlinie bzw. Unrißlinien der Minichipkarte in den Kartenkörper derart eingestanzt werden, daß zwar die Kartendicke vollständig durchtrennt, die Befestigungselemente aber im wesentlichen unbeschädigt bleiben.

8. Verfahren nach Anspruch 6 oder 7, dadurch **gekennzeichnet**, daß pro Wertkarte mehrere Minichipkarten vorgesehen bzw. ausgestanzt werden.
